# EUROPEAN PATENT APPLICATION

(11) **EP 4 567 941 A1**
(43) Date of publication of application: **11.06.2025**
(21) Application number: 24188407.1
(22) Date of filing: 12.07.2024
(51) Int. Cl.: H01M 8/04089, H01M 8/04223

(54) **AIR-INDEPENDENT PROPULSION FUEL CELL SYSTEM**

(30) Priority: 08.12.2023 KR 20230177387
(71) Applicant: Hanwha Aerospace Co., Ltd., Gyeongsangnam-do 51542 (KR)
(72) Inventor: Seo, Dong Jun, 51542 Seongju-dong, Changwon-si, Gyeongsangnam-do (KR); Oh, Dong Jo, 51542 Seongju-dong, Changwon-si, Gyeongsangnam-do (KR)
(74) Representative: Gulde & Partner

(57) **Abstract**

An air-independent propulsion, AIP, fuel cell system includes, a fuel cell stack in which an anode and a cathode are disposed to face each other across an electrolyte membrane, the fuel cell stack generating power using a fuel gas and an oxidant gas, a fuel gas supply path supplying the fuel gas to the anode, a fuel gas circulation path supplying an unreacted fuel gas discharged from the anode to the fuel gas supply path, an oxidant gas supply path supplying the oxidant gas to the cathode, an oxidant gas circulation path supplying an unreacted oxidant gas discharged from the cathode to the oxidant gas supply path, and a purge path connected to the oxidant gas circulation path by branching off from one point in the fuel gas circulation path, and supplying at least one of the discharged unreacted fuel gas to the oxidant gas circulation path.

## Description

### BACKGROUND

### 1. Field

The present disclosure relates to a fuel cell system operating in an environment where air cannot be supplied, and more particularly, to a fuel cell system that can resolve the issue of nitrogen cross-over to the anode side in a fuel cell stack supplying air and nitrogen together to the cathode side to simulate actual atmospheric conditions.

### 2. Description of the Related Art

Fuel cell systems are eco-friendly power generation systems that convert hydrogen into electrical energy through an electrochemical reaction with oxygen in the air, possessing high energy densities and eco-friendly characteristics. For this reason, the fuel cell systems are widely utilized in power generation facilities where hydrogen supply is possible, in mobile devices, and in moving devices applying fuel tanks.

Furthermore, fuel cells for submarines or high-altitude aviation, where air supply from the atmosphere is difficult, generate power by reacting oxygen from oxygen tanks with hydrogen from hydrogen tanks, and this is referred to as a so-called air-independent propulsion (AIP) method. When using high concentrations of oxygen and hydrogen together, there are advantages such as increased material diffusion and the ability to generate high currents.

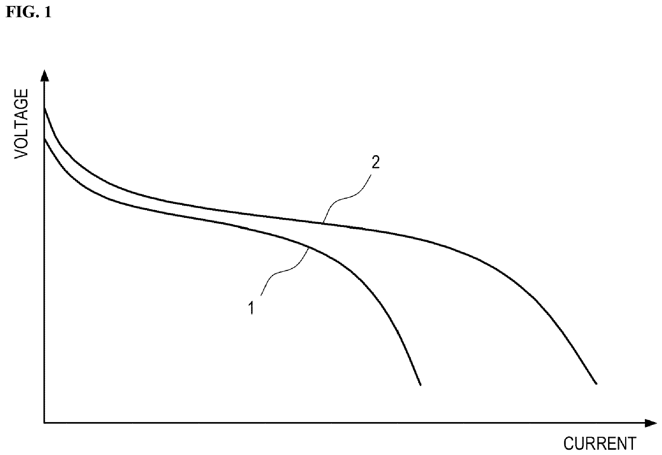

For reference, FIG. 1 shows the performance curves of a fuel cell system for a cases (1) and (2) where air and pure oxygen are supplied, respectively. The performance (output) of the fuel cell system may generally be evaluated by the product of current and voltage, and it can be seen from FIG. 1 that the supply of pure oxygen (2) produces a higher output than the supply of air (1). Especially, the magnitude of the current generated at low voltage is significantly higher with the supply of pure oxygen (2).

On the other hand, as the operating time of fuel cells using high concentrations of oxygen increases, the generation of oxidizing species within membrane electrode assemblies (MEAs) or electrolyte membranes is accelerated, leading to lower durability compared to air-using fuel cells. As a result, fuel cell stacks using pure oxygen, in comparison to air-based fuel cell stacks, employ higher catalyst loadings and thicker electrolyte membranes to prevent rapid performance degradation, which results in higher manufacturing costs.

Therefore, in environments such as submarines, high-altitude aircraft, and space, where air supply from the atmosphere is difficult, fuel cell systems using the AIP method can employ a circulation system that supplies a mixed gas of nitrogen and oxygen simulating the atmosphere, to address the issue of oxidizing species generation. In this case, a closed-circuit operation occurs, with no external gas discharge.

Since there is no nitrogen at the cathodes of AIP fuel cells using pure oxygen, nitrogen does not accumulate at the anodes. However, in AIP fuel cells using a mixture of nitrogen and oxygen, since nitrogen crosses over the electrolyte membranes after a prolonged operation, it moves from the cathodes to the anodes and continuously accumulates at the anodes, while circulating in the hydrogen loops. Particularly, the increased concentration of accumulated nitrogen reduces the concentration or partial pressure of hydrogen, leading to a decrease in the performance of the fuel cells.

Therefore, to prevent the accumulation of nitrogen at the anode side, or an increase in nitrogen concentration, it is necessary to periodically purge through a purge valve or store the purged gas in a storage tank.

Moreover, since nitrogen is an inert gas and does not react, its concentration at the cathode side needs to be uniformly maintained. However, as nitrogen crosses over to the anode side, additional nitrogen needs to be supplied to the cathode side, thus requiring an additional system for nitrogen supply in the overall system.

### SUMMARY

Aspects of the present disclosure provide resolving the issue in an air-independent propulsion (AIP) fuel cell system using a mixture of nitrogen and oxygen, where the penetration of nitrogen from a cathode to an anode leads to a decrease in nitrogen concentration at the cathode and an increase at the anode.

Aspects of the present disclosure also provide maintaining, in AIP fuel cell systems using a mixture of nitrogen and oxygen, the nitrogen concentration on the sides of a cathode and an anode by recirculating the nitrogen from the anode to the cathode, without the need for supplying additional nitrogen.

However, aspects of the present disclosure are not restricted to those set forth herein. The above and other aspects of the present disclosure will become more apparent to one of ordinary skill in the art to which the present disclosure pertains by referencing the detailed description of the present disclosure given below.

According to an aspect of the present disclosure, there is provided an air-independent propulsion (AIP) fuel cell system including: a fuel cell stack in which an anode and a cathode are disposed to face each other across an electrolyte membrane, the fuel cell stack generating power using a fuel gas and an oxidant gas; a fuel gas supply path supplying the fuel gas to the anode; a fuel gas circulation path supplying an unreacted fuel gas discharged from the anode to the fuel gas supply path; an oxidant gas supply path supplying the oxidant gas to the cathode; an oxidant gas circulation path supplying an unreacted oxidant gas discharged from the cathode to the oxidant gas supply path; and a purge path connected to the oxidant gas circulation path and to the fuel gas circulation pathby branching off from one point in the fuel gas circulation path, and supplying at least one of the discharged unreacted fuel gas to the oxidant gas circulation path.

The oxidant gas may include oxygen and nitrogen.

The concentration of oxygen in the oxidant gas may range 20% to 90%, preferably 30% to 80%, more preferably 40% to 70% or 50% to 60%. If power generation performance in MEAs is prioritized, it is advantageous to supply a high oxygen concentration, and if durability is considered, a low oxygen concentration (as low as 20%) is advantageous and so the power output is relatively limited. Therefore, a system configuration that controls the oxygen concentration may be required depending on the operating conditions. Accordingly, if the oxygen concentration is below the lower limit of the numerical ranges, the amount of oxygen is insufficient, resulting in lower output, and if it is above the upper limit, the generation of oxidizing species is promoted, resulting in weaker durability compared to fuel cells using air.

The AIP fuel cell system may further include an oxidant gas supply unit supplying the oxidant gas to the oxidant gas supply path, wherein the oxidant gas supply unit supplies a mixed gas of oxygen and nitrogen once at the start-up of the AIP fuel cell system and thereafter replenishes the oxygen reduced by a reaction with the fuel gas.

The discharged unreacted fuel gas may include the supplied fuel gas and some of the nitrogen from the oxidant gas that has diffused through the electrolyte membrane to the anode.

The oxidant gas may further includs inert gas, comprising at least one of argon and helium.

The AIP fuel cell system may further include a pressure pump installed in the middle of the purge path and pressurizing and supplying at least some of the discharged unreacted fuel gas to the oxidant gas circulation path.

The AIP fuel cell system may further include a hydrogen separation device installed in the middle of the purge path and extracting and separating at least some of hydrogen from the discharged unreacted fuel gas.

The AIP fuel cell system may further include a hydrogen reuse path connecting the hydrogen separation device to the fuel gas circulation path and the hydrogen separated by the hydrogen separation device may be recirculated by being supplied through a hydrogen reuse path to the fuel gas circulation path.

Nitrogen that remains after the separation of hydrogen by the hydrogen separation device may be recirculated by being supplied to the oxidant gas circulation path.

The hydrogen separated by the hydrogen separation device may be stored in a separate storage tank.

The hydrogen separation device may include an inlet port, which is for collecting hydrogen present in an enclosed space due to leaks from either the fuel cell stack or the fuel gas supply path, the fuel gas circulation path, the oxidant gas supply path, the oxidant gas circulation path; and the purge path, and gas processing means, which is for physically or chemically treating hydrogen included in the discharged unreacted fuel gas or the hydrogen present in the enclosed space.

The inlet port may be disposed at an upper part of the enclosed space.

The hydrogen separation device may further include a temperature sensor, which is for measuring the temperature of the hydrogen separation device, and if the temperature measured by the temperature sensor exceeds a threshold, a control unit performs a fail-safe operation to stop an operation of the AIP fuel cell system.

The hydrogen separation device may further include a heat exchanger, which supplies heat generated during the treatment of the hydrogen in the gas processing means to the outside.

According to the aforementioned and other embodiments of the present disclosure, since the nitrogen concentration on the sides of a cathode and an anode can be maintained by recirculating the nitrogen from the anode to the cathode without supplying additional nitrogen, the efficiency of an AIP fuel cell system can be enhanced, and at the same time, the cost and weight of the AIP fuel cell system can be reduced.

It should be noted that the effects of the present disclosure are not limited to those described above, and other effects of the present disclosure will be apparent from the following description.

### BRIEF DESCRIPTION OF THE DRAWINGS

The above and other aspects and features of the present disclosure will become more apparent by describing in detail exemplary embodiments thereof with reference to the attached drawings, in which:
FIG. 1 is a diagram showing the performance curves of a fuel cell system for cases where air and pure oxygen are supplied, respectively;
FIG. 2 is a diagram showing decreases in current density according to the nitrogen concentration at an anode outlet;
FIG. 3 is a diagram illustrating the process of maintaining hydrogen concentration and cell voltage above particular levels through hydrogen/nitrogen purging when the cell voltage decreases as the operating time increases;
FIG. 4 is a diagram illustrating the structure of a fuel cell stack according to an embodiment of the present disclosure;
FIG. 5 is a diagram illustrating the configuration of an AIP fuel cell system according to an embodiment of the present disclosure;
FIG. 6 is a diagram illustrating the configuration of an AIP fuel cell system according to another embodiment of the present disclosure; and
FIG. 7 is a diagram illustrating the configuration of a hydrogen separation device and control unit according to an embodiment of the present disclosure.

### DETAILED DESCRIPTION

Advantages and features of the disclosure and methods to achieve them will become apparent from the descriptions of exemplary embodiments herein below with reference to the accompanying drawings. However, the inventive concept is not limited to exemplary embodiments disclosed herein but may be implemented in various ways. The exemplary embodiments are provided for making the disclosure of the inventive concept thorough and for fully conveying the scope of the inventive concept to those skilled in the art. It is to be noted that the scope of the disclosure is defined only by the claims. Like reference numerals denote like elements throughout the descriptions.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and/or the present application, and will not be interpreted in an idealized or overly formal sense unless expressly so defined herein.

Terms used herein are for illustrating the embodiments rather than limiting the present disclosure. As used herein, the singular forms are intended to include plural forms as well, unless the context clearly indicates otherwise. Throughout this specification, the word "comprise" and variations such as "comprises" or "comprising," will be understood to imply the inclusion of stated elements but not the exclusion of any other elements.

Hereinafter, exemplary embodiments of the present disclosure will be described in detail with reference to the accompanying drawings.

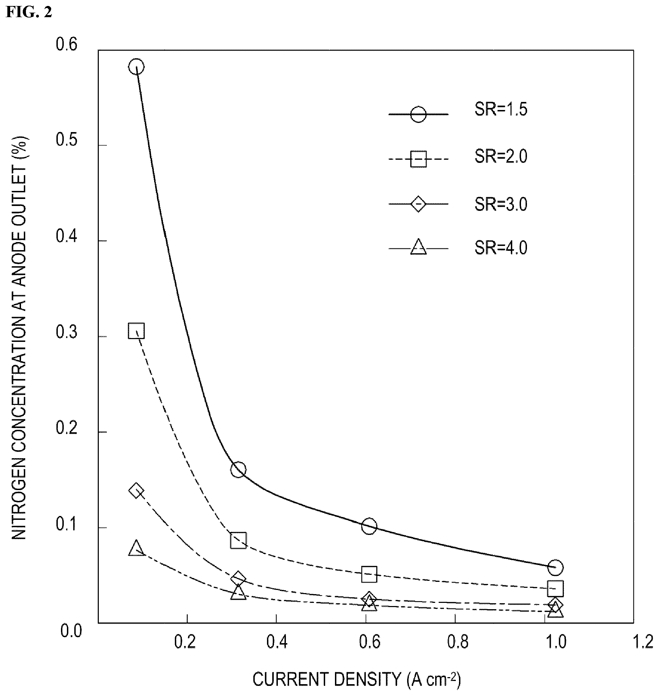

FIG. 2 is a diagram showing decreases in current density according to the nitrogen concentration at an anode outlet. Referring to FIG. 2, the relationship between the nitrogen concentration at the anode outlet and the current density may be understood based on a stoichiometry ratio (SR) value, which represents the ratio of air to a fuel gas supplied to a fuel cell stack. Regardless of the SR value, an increase in the nitrogen concentration at the anode outlet significantly reduces the current density.

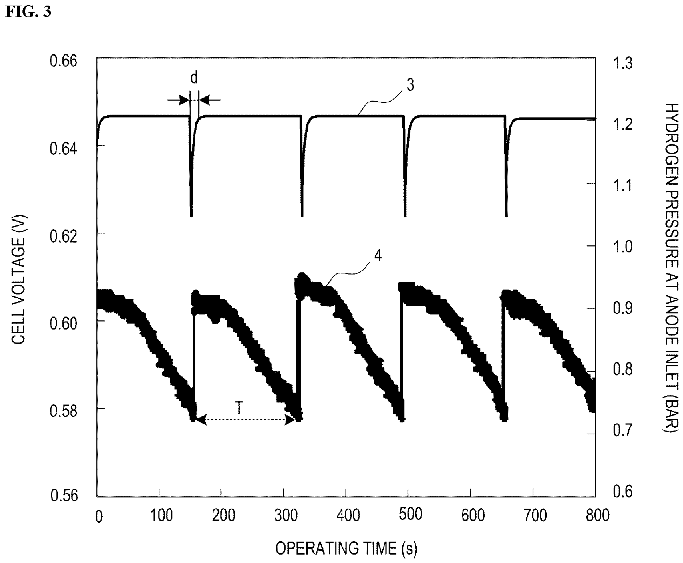

In other words, as the nitrogen concentration at the anode increases, the partial pressure of hydrogen decreases, not only gradually reducing the performance during the operation of the fuel cell stack but also causing irregular hysteresis in the fuel cell stack, as shown in FIG. 3, and can lead to a rapid decline in cell voltage 4. Thus, when the concentration of nitrogen at the anode side increases, it is necessary to perform purging periodically using a purge valve to maintain the concentration of hydrogen.

As shown in FIG. 3, by expelling the gas from the anode side through the purge valve for a predetermined purge duration d at each predetermined purge cycle T and supplying new hydrogen, a hydrogen pressure or partial pressure 3 at the anode side is increased, consequently restoring the cell voltage 4.

In this case, however, hydrogen and nitrogen need to be expelled externally, which poses risks depending on the operating environment, and there arises a limitation that a long-term operation is only possible if maintaining an additional nitrogen supply to the cathode is continued.

Therefore, the present disclosure proposes an AIP fuel cell system, which can maintain the concentration of hydrogen (H₂) at an anode side by purging (or recirculating) nitrogen (N₂) from the anode side to a cathode side and can sustain a continuously operable environment without the need for additional components to maintain the concentration of N₂ at the cathode side.

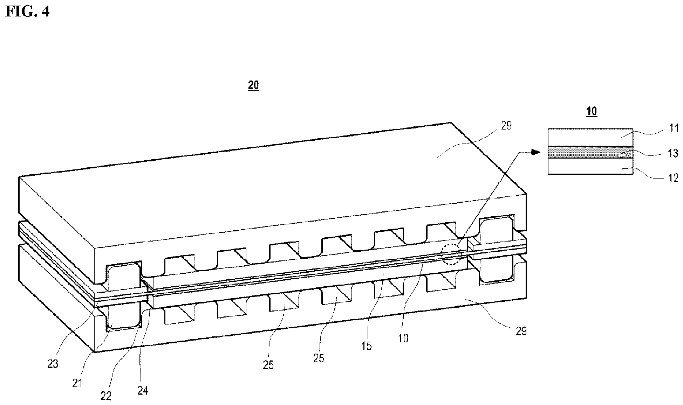

FIG. 4 is a diagram illustrating the structure of a fuel cell stack 20 according to an embodiment of the present disclosure.

Referring to FIG. 4, for example, the fuel cell stack 20 includes a membrane electrode assembly (MEA) 10, which consists of a stack of a cathode 11, an anode 12, and an electrolyte membrane 13, a gas diffusion layer 15, a plurality of flow channels 25, various gaskets (21 and 23), a hermetic channel 22, and an MEA-gasket junction 24. These components are held and supported between opposing metal separator plates or bi-polar plates (BPPs) 29.

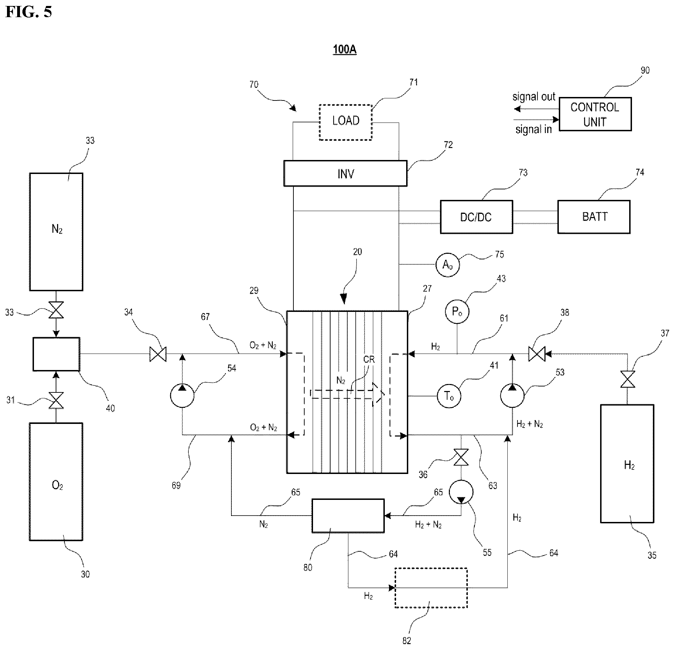

FIG. 5 is a diagram illustrating the configuration of an AIP fuel cell system 100A according to an embodiment of the present disclosure.

Referring to FIG. 5, a fuel cell stack 20, which is a core component for power generation using a fuel gas (H₂) and an oxidant gas (O₂+N₂), has an anode 27 and a cathode 29 arranged to face each other across an electrolyte membrane.

Additionally, the hydrogen used as the fuel gas (H₂) is stored in a fuel tank 35, while the oxygen and nitrogen of the oxidant gas (O₂+N₂) are stored in an oxygen tank 30 and a nitrogen tank 33, respectively. In the following, the oxidant gas will be described as comprising oxygen and nitrogen. However, this is merely an example, and other inert gases such as argon, helium, etc., may be added in addition to or instead of nitrogen.

Firstly, O₂ is supplied from the oxygen tank 30 through an oxygen valve 31 to an oxidant gas supply unit 40, and N₂ is supplied from the nitrogen tank 33 through a nitrogen valve 33 to the oxidant gas supply unit 40. The oxidant gas supply unit 40 temporarily stores a mixed gas (O₂+N₂) and then supplies the mixed gas (O₂+N₂) to an oxidant gas supply path 67 through a supply valve 34 under the control of a control unit 90. Although N₂ and O₂ account for about 79% and 20%, respectively, of the atmosphere, the mixed gas (O₂+N₂) does not need to maintain the same ratios of O₂ and N₂ therein. For example, the concentration of O₂ in the mixed gas may range from 20-90%.

If the concentration of N₂ in the mixed gas (O₂+N₂), circulating at the cathode 29, can be maintained almost uniformly, continuous supply of N₂ may be unnecessary. Therefore, the oxidant gas supply unit 40 may only need to supply the mixed gas (O₂+N₂) once at the startup of the AIP fuel cell system 100A, and later on, may only replenish the amount of O₂ reduced by the reaction with the fuel gas (H₂).

Similarly, hydrogen (H₂) is supplied from the fuel tank 35 through a hydrogen valve 37 and a supply valve 38 to a fuel gas supply path 61.

Through this process, the fuel gas (H₂) is supplied to the anode 27 of the fuel cell stack 20 through the fuel gas supply path 61, and the oxidant gas (O₂+N₂) is supplied to the cathode 29 of the fuel cell stack 20 through the oxidant gas supply path 67. Within the fuel cell stack 20, the reaction of the fuel gas (H₂) with O₂ produces water (H₂O) and generates current, which is then supplied to the power meter 70.

The power meter 70 is equipped with an inverter 72, a direct current-to-direct current (DC-to-DC) converter 73, a battery 74, and a current sensor 75. The inverter 72 is connected in parallel to the fuel cell stack 20 and the battery 74 and converts the DC supplied from either the fuel cell stack 20 or the battery 74 into an alternating current (AC) to supply the AC to the load device 71. The DC-to-DC converter 73 boosts the output voltage of the battery 74 to supply the boosted voltage to the inverter 72 and steps down the output voltage to charge the battery 74 with surplus power generated by the fuel cell stack 20.

The DC-to-DC converter 73 may control a generation current and voltage of the fuel cell stack 20 based on the current demand received from the control unit 90. Additionally, the current sensor 75 measures an output current Aₒ of the fuel cell stack 20 during generation and transmits the output current Aₒ to the control unit 90. Similarly, a pressure sensor 43 measures a pressure Pₒ of the fuel gas (H₂) in the fuel cell supply path 61 and transmits the pressure Pₒ to the control unit 90, and a temperature sensor 41 measures an internal temperature Tₒ of the fuel cell stack 20 and transmits the internal temperature Tₒ to the control unit 90.

During the process where water is produced and current is generated from the reaction of the fuel gas (H₂) with O₂ within the fuel cell stack 20, N₂, which does not participate in the corresponding reaction, moves to the anode 27 through the minute pores of the electrolyte membrane due to the concentration difference between the cathode 29 and the anode 27. This phenomenon is referred to as gas crossover CR. Consequently, a certain amount of N₂ is found at the anode 27, which otherwise solely receives and circulates the pure fuel gas (H₂).

According to the embodiment of FIG. 5, the fuel cell stack 20 can enhance the recyclability of gases by recirculating the fuel gas (H₂) and the oxidant gas (O₂+N₂) supplied thereto through the fuel gas supply path 61 and the oxidant gas supply path 67, respectively. Specifically, an unreacted fuel gas (H₂+N₂) discharged from the anode 27 are recirculated to the fuel gas supply path 61 through a fuel gas circulation path 63, and an unreacted oxidant gas (O₂+N₂) discharged from the cathode 29 is recirculated to the oxidant gas supply path 67 through an oxidant gas circulation path 69. Most of the unreacted oxidant gas (O₂+N₂) from the cathode 29 is N₂ with a small amount (e.g., 0% to 50%) of O₂ being present. Here, N₂ can be reused and does not need to be continuously supplied, but the oxygen (O₂) reduced in the reaction of the fuel gas (H₂) with O₂ needs to be replenished from the oxygen tank 30.

Furthermore, to facilitate the recirculation of gases, pressure pumps 53 and 54 may be installed in the fuel gas circulation path 63 and the oxidant gas circulation path 69, respectively.

However, during the repeated recirculation of the gases from the cathode 29 and the anode 27, due to the gas crossover CR, the concentration of N₂ at the cathode 29 gradually decreases, while the concentration of N₂ at the anode 27 gradually increases. This phenomenon induces the need to replenish N₂ at the cathode 29 and to remove N₂ at the anode 27.

In consideration of these and other issues, the AIP fuel cell system 100A further includes a purge path 65, which connects the fuel gas circulation path 63 and the oxidant gas circulation path 69. The purge path 65 is connected to the oxidant gas circulation path 69 by branching off from one point in the fuel gas circulation path 63, and functions to supply at least some of the unreacted fuel gas (H₂+N₂) to the oxidant gas circulation path 69. Here, the oxidant gas (O₂+N₂) includes O₂ and N₂, and the unreacted fuel gas (H₂+N₂) include the supplied fuel gas (H₂) and a portion of N₂ from the oxidant gas (O₂+N₂) that has permeated through the electrolyte membrane to the anode 27.

A pressure pump 55 and/or a valve 36 may be installed in the middle of the purge path 65 to facilitate the smooth supply (or reuse) of at least some of the unreacted fuel gas (H₂+N₂) to the oxidant gas circulation path 69. However, as the reuse through the purge path 65 may not always be necessary, the control unit 90 may enable a reuse process through the purge path 65 by opening the valve 36 to operate the pressure pump 55 only when the partial pressure (or concentration) of N₂ relative to H₂ within the fuel gas circulation path 63 exceeds a predetermined threshold. This reuse process may be performed intermittently or periodically and may be carried out without stopping the operation of the AIP fuel cell system 100A.

As the unreacted fuel gas (H₂+N₂) is supplied to the oxidant gas circulation path 69 through the pressure pump 55, recirculated nitrogen (N₂) may be reused. However, there may be unreacted hydrogen (H₂) present at the cathode 29, and the unreacted hydrogen may react with O₂ in the presence of a catalyst such as platinum (Pt), cobalt (Co), etc., producing a small amount of H₂O as a side effect. However, as long as the concentration of the unreacted hydrogen does not exceed a threshold, the overall efficiency of the AIP fuel cell system 100A may not be significantly affected.

The removal of such minute amounts of unreacted hydrogen can contribute further to the overall reaction efficiency. Therefore, in the middle of the purge path 65, specifically downstream of the pressure pump 55 in the purge path 65, a hydrogen separation device 80 may be installed to extract and separate at least some of the hydrogen from the unreacted fuel gas (H₂+N₂). The hydrogen separation device 80 may separate hydrogen from the unreacted fuel gas (H₂+N₂) using a method such as membrane exchange, physical separation, or chemical separation. Alternatively, the hydrogen separation device 80 may also remove H₂ from the unreacted fuel gas (H₂+N₂). Various techniques using Pt-based catalysts to remove hydrogen at room temperature (e.g., KR 2013-0082272A, KR 2016-0073797A, etc.) are known for this type of removal method.

The nitrogen (N₂) remaining after the separation/removal of H₂ in the hydrogen separation device 80 (which may contain 0-4% of H₂, preferably less than 0.5% of H₂) is resupplied to the oxidant gas circulation path 69 through the purge path 65. Moreover, the separated hydrogen (H₂) from the hydrogen separation device 80 may be stored in a storage tank 82, or may be supplied back to the fuel gas circulation path 63 through a separate hydrogen reuse path 64. The separate hydrogen reuse path 64 connecting the hydrogen separation device 80 to the fuel gas circulation path 63.

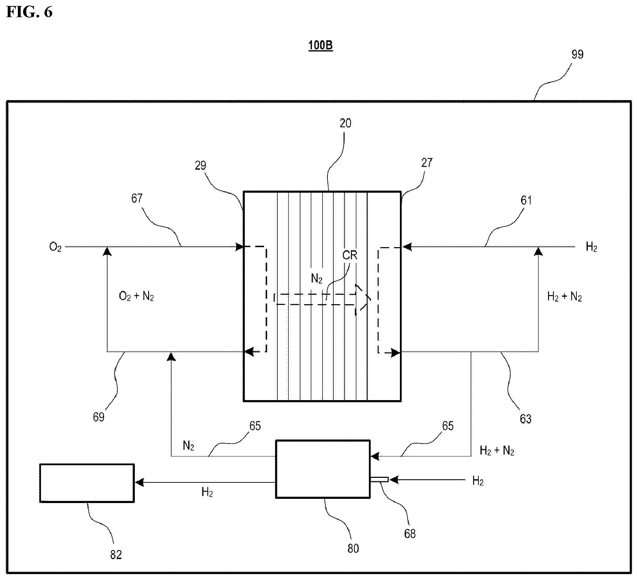

FIG. 6 illustrates the configuration of an AIP fuel cell system 100B according to another embodiment of the present disclosure. The configuration of the AIP fuel cell system 100B of FIG. 6 is almost similar to that of the AIP fuel cell system 100A of FIG. 5, except that a fail-safe feature is added to the fuel cell system 100B.

Referring to FIG. 6, the AIP fuel cell system 100B is typically housed in an enclosed space 99 for safety. The enclosed space 99 is for preventing accidents caused by gas leaks from any part of the AIP fuel cell system 100B. However, such leaked gas (especially H₂) accumulated above a certain concentration in the enclosed space 99 may also be a dangerous situation.

Accordingly, a hydrogen separation device 80 installed in the AIP fuel cell system 100B may include an inlet port 68, which is for collecting H₂ present in the enclosed space 100 due to leaks from a fuel cell stack 20 or some of a plurality of paths (61, 63, 64, 65, 67, and 69), acting as an emergency purification device. Given the lightweight nature of H₂, it is preferable for the inlet port 68 to be located at an upper part of the enclosed space 99.

Therefore, the hydrogen separation device 80 may extract and separate the hydrogen (H₂) introduced through the inlet port 68 and the hydrogen (H₂) from an unreacted fuel gas (H₂+N₂) discharged from an anode 27. The separated hydrogen (H₂) may be stored in a separate storage tank 82. The nitrogen (N₂) remaining after the separation of the hydrogen may be recirculated to an oxidant gas circulation path 69, and the separated hydrogen (H₂) may be recirculated to a fuel gas circulation path 63.

Additionally, if the flow rate of the hydrogen introduced through the inlet port 68 exceeds a predetermined threshold, a control unit 90 may store the hydrogen in the storage tank 82 and may even stop the operation of the AIP fuel cell system 100B.

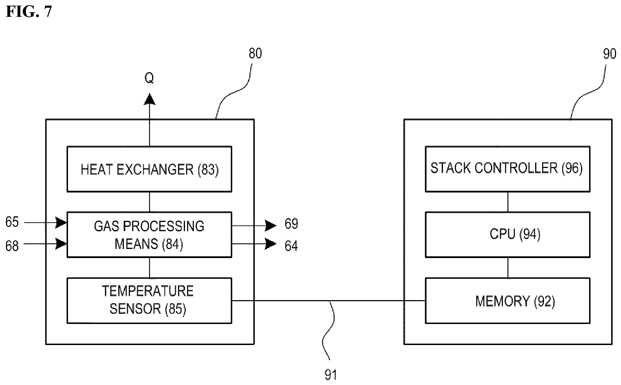

FIG. 7 illustrates the configurations of a hydrogen separation device 80 and a control unit 90 according to an embodiment of the present disclosure. Referring to FIG. 7, the hydrogen separation device 80 includes gas processing means 84 and a temperature sensor 85 and may further include a heat exchanger 83.

The gas processing means 84 is means for physically or chemically separating or removing the hydrogen introduced through a purge path 65 or an inlet port 68. Here, the means for separation may include a membrane exchange method, a physical separation method, or a chemical separation method, and the means for removal may be a platinum-based catalyst. Hydrogen (H₂) separated through the gas processing means 84 may be supplied to a reuse path 64 or a storage tank 82, and the remaining nitrogen (N₂) from the separation may be supplied to an oxidant gas circulation path 69.

The temperature sensor 85 measures the temperature of the hydrogen separation device 80 and provides the result of the measurement to the control unit 90.

The heat exchanger 83 discharges heat Q generated during the treatment of H₂ in the gas processing means 84 to the outside. For example, the heat Q may be generated by an exothermic chemical reaction between H₂ and the gas processing means 84. The heat Q may be used for heating or other purposes within a device equipped with an AIP fuel cell system.

The control unit 90 is connected to the hydrogen separation device 80 via a communication bus 91 and includes a central processing unit (CPU) 94, a memory 92, and a stack controller 96. The CPU 94 controls the operations of the other components of the control unit 90. The memory 92 may receive data or signals from the other components connected via the communication bus 91 and may store results of the operation of the CPU 94 or data required for the operation of the CPU 94. The memory 92 may be implemented as a volatile or nonvolatile memory. The stack controller 96 may perform a fail-safe operation to stop the operation of the AIP fuel cell system if the temperature measured by the temperature sensor 85 exceeds a threshold. This fail-safe feature can be advantageously applied to environments where it is difficult or costly to install expensive real-time hydrogen concentration meters or where cost reduction is necessary.

Here, each of the paths 61, 63, 64, 65, 67, and 69 may be implemented as a pipe transporting gas. The pumps 53, 54, 55 are arranged on the paths 61, 63, 64, 65, 67, and 69 by connecting them onto the pipe.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. An air-independent propulsion, AIP, fuel cell system (100A, 100B) comprising:
a fuel cell stack in which an anode (12, 27) and a cathode (11, 29) are disposed to face each other across an electrolyte membrane (13), the fuel cell stack generating power using a fuel gas and an oxidant gas;
a fuel gas supply path (61) supplying the fuel gas to the anode (12, 27);
a fuel gas circulation path (63) supplying an unreacted fuel gas discharged from the anode (12, 27) to the fuel gas supply path (61);
an oxidant gas supply path (67) supplying the oxidant gas to the cathode (11, 29);
an oxidant gas circulation path (69) supplying an unreacted oxidant gas discharged from the cathode (11, 29) to the oxidant gas supply path (67); and
a purge path (65) connected to the oxidant gas circulation path (69) by branching off from one point of the fuel gas circulation path (63), and supplying at least a part of the discharged unreacted fuel gas to the oxidant gas circulation path (69).

2. The AIP fuel cell system (100A, 100B) of claim 1, wherein the oxidant gas includes oxygen and nitrogen.

3. The AIP fuel cell system (100A, 100B) of claim 2, wherein the concentration of oxygen in the oxidant gas ranges 20% to 90%.

4. The AIP fuel cell system (100A, 100B) of claim 2 or 3, further comprising:
an oxidant gas supply unit (40) supplying the oxidant gas to the oxidant gas supply path (67),
wherein the oxidant gas supply unit (40) is configured to supply a mixed gas of oxygen and nitrogen at a start-up of the AIP fuel cell system (100A) and replenish the oxygen reduced by a reaction with the fuel gas.

5. The AIP fuel cell system (100A, 100B) of any of claims 2 to 4, wherein the discharged unreacted fuel gas includes the supplied fuel gas and the nitrogen from the oxidant gas that has diffused through the electrolyte membrane (13) to the anode (12, 27).

6. The AIP fuel cell system (100A, 100B) of any of claim 2 to 5, wherein the oxidant gas further includes inert gas which comprises at least one of argon and helium.

7. The AIP fuel cell system (100 A) of any of the preceding claims, further comprising:
a pressure pump (55) arranged on the purge path (65) and pressurizing and supplying at least a part of the discharged unreacted fuel gas to the oxidant gas circulation path (69).

8. The AIP fuel cell system (100A, 100B) of any of the preceding claims, further comprising:
a hydrogen separation device (80) arranged on the purge path (65) and extracting and separating at least a part of hydrogen from the discharged unreacted fuel gas.

9. The AIP fuel cell system (100A) of claim 8, wherein the AIP fuel cell system is configured such that the hydrogen separated by the hydrogen separation device (80) is recirculated by being supplied through a hydrogen reuse path (64) to the fuel gas circulation path (63).

10. The AIP fuel cell system (100A) of claim 9, wherein the AIP fuel cell system is configured such that nitrogen that remains after the separation of hydrogen by the hydrogen separation device (80) is recirculated by being supplied to the oxidant gas circulation path (69).

11. The AIP fuel cell system (100A) of claim 8, wherein the AIP fuel cell system is configured such that the hydrogen separated by the hydrogen separation device (80) is stored in a separate storage tank (82).

12. The AIP fuel cell system (100B) of claim 8, wherein the hydrogen separation device (80) includes:
an inlet port (68), which is for collecting hydrogen present in an enclosed space (99) due to leaks from either the fuel cell stack or the fuel gas supply path (61), the fuel gas circulation path (63), the oxidant gas supply path (67), the oxidant gas circulation path (69), and the purge path (65), and
gas processing means (84), which is for physically or chemically treating hydrogen included in the discharged unreacted fuel gas or the hydrogen present in the enclosed space (99).

13. The AIP fuel cell system (100B) of claim 12, wherein the inlet port (68) is disposed at an upper part of the enclosed space (99).

14. The AIP fuel cell system (100B) of claim 12 or 13, wherein
the hydrogen separation device (80) further includes a temperature sensor (85) for measuring the temperature of the hydrogen separation device (80) and a control unit (90),
if the temperature measured by the temperature sensor (85) exceeds a threshold, the control unit (90) is configured to perform a fail-safe operation to stop an operation of the AIP fuel cell system (100B).

15. The AIP fuel cell system (100B) of any of claims 12 to 14, wherein the hydrogen separation device (80) further includes a heat exchanger (83), which supplies heat generated during the treatment of the hydrogen in the gas processing means (84) to the outside.
